# EUROPEAN PATENT SPECIFICATION

(11) **EP 3 484 769 B1**
(45) Date of publication and mention of the grant of the patent: **13.10.2021**
(21) Application number: 17743149.1
(22) Date of filing: 12.07.2017
(51) Int. Cl.: B64D 13/00, B64D 13/06

(54) **INLINE WATER SEPARATORS**
WASSERABSCHEIDER IN EINE REIHE
SEPARATEURS À L'EAU EN LIGNE

(30) Priority: 12.07.2016 US 201662361182 P
(43) Date of publication of application: 22.05.2019
(73) Proprietor: Sikorsky Aircraft Corporation, Stratford, CT 06615 (US)
(72) Inventor: GERLACH, Jacob, R., Knoxville, TN 37919 (US); BIEHL, Chris, John, Cheshire, CT 06410 (US)
(74) Representative: Schmitt-Nilson Schraud Waibel Wohlfrom Patentanwälte Partnerschaft mbB
(86) International application number: PCT/US2017/041675
(87) International publication number: WO 2018/013661

(56) References cited:
- WO-A1-2014/053865
- GB-A- 744 451
- US-A- 3 349 548
- US-A- 3 394 533

## Description

### BACKGROUND OF THE INVENTION

### 1. Field of the Invention

The present disclosure relates to environmental control systems, and more particularly to environmental control systems such as used in aircraft.

### 2. Description of Related Art

Water condensation exists in discharge ducting for air cycle environmental control systems, e.g., in air conditioning systems on board aircraft. The condensation can be considerable, and the resulting water must be drained or else it will be discharged into the cockpit or cabin, for example, where it is undesirable. Some aircraft utilize coalesce style water separators designed to collect and remove condensate from the environmental control system.

Such conventional methods and systems have generally been considered satisfactory for their intended purpose. However, there is still a need in the art for improvements in environmental control systems. The present disclosure provides a solution for this need.

US 3,394,533 discloses, in a separator, the combination with a separator chamber provided with an inlet and outlet opening through which a fluid stream may pass containing liquid and gas, a coalescer mounted in the path of said inlet opening for precipitating minute liquid droplets in said fluid stream.

US 3,349,548 discloses an apparatus for separating steam and water from a fluid mixture of such constituents comprising: a fluid-impervious upright cylindrical tubular housing having upper and lower ends; a partial cylinder formed by cutting away the upper portion of a cylinder so as to define an upper helical boundary, the partial cylinder being coaxially mounted within the housing and spaced from the inner surface of the side wall of the tubular housing so as to define an annular space therebetween, the partial cylinder spaced from the upper and lower ends of the housing; a downwardly extending helical deflector strip spanning the annular space and extending laterally from the cylinder helical upper boundary into contact with the tubular housing surface along its length and defining the upper limit of a descending helical path, the helical deflector strip extending through substantially a single convolution about the cylinder along the helical upper boundary from the top to the bottom of the cylinder to allow free gravitational movement of the mixture below the strip; a downwardly directed tangential inlet connected to the tubular housing side wall adjacent and below the upper end of the strip for introducing a steam-water mixture into the annular space below the upper end of the strip and above the lower end of the strip so that the strip will act as an upper fluid guide; means spaced beneath the cylinder and above the lower end for further separation of the mixture, the means comprising a disc having a plurality of peripheral angularly disposed deflector vanes, liquid outlet(s) disposed through the lower end of the tubular housing, spaced from and of smaller cross-section than the cylinder disposed through the tubular housing's upper end for receiving steam.

GB 744,451 discloses an apparatus for generating purge gas supplied to compartments, e.g., in an aircraft, in which inflammable vapor may collect. The apparatus comprises a combustion chamber, in which combustion products are generated by the combustion of fuel in air under pressure, and a heat-exchanger, in which the combustion products are cooled before passing to the compartments. The combustion apparatus has a flame tube to which combustion air is supplied from the duct through the tube to a chamber formed by the walls, the air entering the flame tube through slits in the conical end wall. Fuel is supplied from the injector and ignition is caused by a sparking plug, these two components being mounted on a spider mounted on a ring. The downstream end of the flame tube is open but the surrounding shell is closed by a plate.

WO 2014/053865 A1 discloses a water structuring device composed of a spirally bent tube, the inner spiral lamella and the magnets of appropriate shapes and characteristics, fitted into the magnet holders located at any position on the spiral tube, wherein the spiral lamella is inserted in the tube prior to its bending and the resulting tube-inner lamella assembly is bent into a desired shape of the spirally bent tube, in which the inner spiral lamella is inserted. The spirally bent tube, subject to the given parameters of the device, may have either shape of a three-dimensional spiral, varying in respect to x, y and z axes, wherein the length and the diameter of the spirally bent tube as well as the number and shape of its curves may vary, and the curves of the spirally bent tube may have equal or different diameters. Component parts of the water structuring device are also the magnet holders, composed of the magnet holder body, opening through which the spirally bent tube passes, the groove in which ring magnets, or cylindrical magnets are fitted, wherein the number, size, polarity, strength and type of the magnets as well as their positioning inside the holders depend on the given parameters of the device. The application of the unstructured water structuring device is based on the principle that the unstructured water, after entering the device through the inlet at a pressure of not less than 0.5 bar, flows through the spirally bent tube whereby the water is exposed to the kinetic energy deriving from double, rotational flow through the spirally bent tube and spiral flow along the spirally bent lamella which is inserted in its entire length into the lumen of the spirally bent tube, in fact to the double vortex, vortex and helix, centrifugal force, thus achieving the double water whirling combined with simultaneous multiple increase of the path travelled by water molecules within a given period of time. In addition to the kinetic energy, such water is also exposed to the influence of the magnetic field of a certain strength, achieved by the permanent magnets of any discretionally chosen number and size, fitted into the holders of adequate shapes, located at any number of positions on the spiral tube, whereby further whirling is achieved as well as crushing of the dipole water molecule clusters.

Aspects of the invention may solve one or more problems of the art, with the solutions set forth in the independent claims and refinements recited in the dependent claims.

### SUMMARY OF THE INVENTION

An inline water separator includes a tube defining a longitudinal axis, wherein the tube includes a tube wall separating an interior of the tube from an exterior thereof. A tube insert is mounted within the tube. The tube insert includes a sheet that is helically twisted about the longitudinal axis.

The sheet can be twisted at least 200°. The tube insert includes a plurality of mounting tabs bent 90° from the sheet for mounting the tube insert to the tube wall. The mounting tabs can be riveted to the tube wall.

A drain hole can be defined through the tube wall for draining water from condensate from the interior of the tube. A hood can partially cover over the drain hole in the interior of the tube for directing collected water toward the drain hole. A drain tube can be mounted to the tube wall about the drain hole for connecting the tube wall to a drainage system.

At least one of the tube wall and the sheet can include a mesh material. It is also contemplated that at least one of the tube wall and the sheet can include a solid sheet material.

An environmental control system includes an air conditioner with a discharge duct for providing cooled air to an air conditioned space. A water separator as described above is connected in line with the discharge duct for passage of cooled air therethrough. The water separator can be a first water separator, and the system can include a second similar water separator connected in line with the discharge duct. It is also contemplated that a coalesce style water separator can be in series between the air conditioner and the water separator.

The inline water separator can be at any point in the discharge duct, e.g., prior to the drain hole described above (relative to the direction of air flow), which drain hole is at a low point in the tube wall with the drain tube connecting the tube wall to a drainage system. The air conditioner can be mounted onboard an aircraft, and the discharge duct can terminate in a cockpit or cabin of the aircraft. The water separator can be an insert mounted within the discharge duct.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic plan view of an aircraft, showing an environmental control system including two water separators constructed in accordance with an exemplary embodiment of the present disclosure;
Fig. 2 is an axial end perspective view of one of the water separators of Fig. 1, showing the tube wall and the tube insert;
Fig. 3 is a schematic cross-sectional side elevation view of the water separator of Fig. 2, showing the helical configuration of the tube insert;
Fig. 4 is a schematic side elevation view of a portion of the environmental control system of Fig. 1, showing the water separator mounted as an insert within the air conditioner discharge duct; and
Fig. 5 is a perspective end view of another exemplary embodiment of a water separator constructed in accordance with the present disclosure, showing the tube wall and tube insert constructed of a mesh material.

### DETAILED DESCRIPTION OF THE PREFERRED EMBODIMENTS

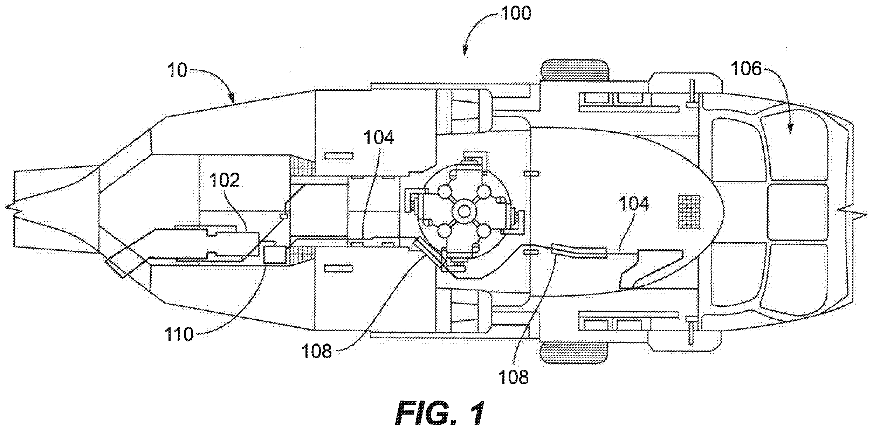

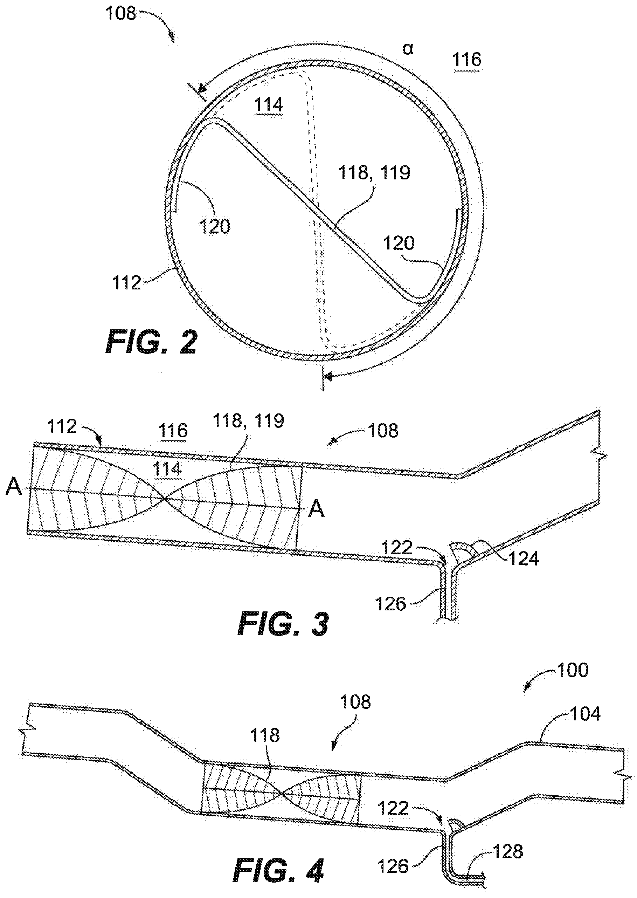

Reference will now be made to the drawings wherein like reference numerals identify similar structural features or aspects of the subject disclosure. For purposes of explanation and illustration, and not limitation, a partial view of an exemplary embodiment of an environmental control system in accordance with the disclosure is shown in Fig. 1 and is designated generally by reference character 100. Other embodiments of systems in accordance with the disclosure, or aspects thereof, are provided in Figs. 2-5, as will be described. The systems and methods described herein can be used to separate water from a flow of air conditioned air.

Fig. 1 schematically shows an aircraft 10 with an onboard environmental control system 100. System 100 includes an air conditioner 102 and associated heat exchanger 103 are mounted onboard aircraft 10 with a discharge duct 104 for providing cooled air to an air conditioned space, e.g. discharge duct 104 terminates in cabin 106 of aircraft 10. Two water separators 108 are connected in line with the discharge duct 104 for passage of cooled air therethrough. Those skilled in the art will readily appreciate that any suitable number of water separators 108 can be included without departing from the scope of this disclosure. It is also contemplated that a traditional water separator 110 can be in series between the air conditioner 102 and the water separators 108, thus water separators 108 further separate water remaining after air conditioned air has had some water separated at water separator 110.

Referring now to Fig. 2, water separator 108 includes a tube 112 defining a longitudinal axis A, shown in Fig. 3. The tube 112 includes a tube wall separating an interior 114 of the tube from an exterior 116 thereof. A tube insert 118 is mounted within the tube 112. The tube insert 118 includes a sheet 119 that is helically twisted about the longitudinal axis A. The sheet can be twisted at least 200°, as indicated by angle α in Fig. 2, however any other suitable amount of twist can be used without departing from the scope of this disclosure. The tube insert 118 includes a plurality of mounting tabs 120 bent 90° from the sheet 119 for mounting the tube insert 118 to the tube wall of tube 112. The mounting tabs 120 are shown riveted to the tube wall of tube 112 in Fig. 2, however those skilled in the art will readily appreciate that any other suitable type of attachment can be used without departing from the scope of this disclosure.

With reference now to Fig. 3, a drain hole 122 is defined through the tube wall of tube 112 for draining water from condensate from the interior 114 of the tube 112. Tube insert 118 serves to slow and liquefy water in the air stream flowing through discharge duct 104. Tube insert 118 also provides a surface for condensate to form. The droplets gain weight and are centripetally thrown outward and collect in the bottom of tube 112. A hood 124 partially covers over the drain hole 122 in the interior 114 of the tube 112 for directing collected water toward the drain hole 122.

With reference now to Fig. 4, the water separator 108 is an insert mounted within the discharge duct 104. The water separator 108 is positioned at a relatively low point in the discharge duct, e.g., with the drain hole 122 described above at a low point in the tube wall of tube 112 with the drain tube 126 connecting the tube wall to drainage system 128. This positioning of drain tube 126 and water separator 108 can be advantageous as it allows discharge air to pass completely through water separator 108 prior to the air reaching the drain hole 122. Drainage system 128 can lead to a heat exchanger, such as heat exchanger 103, or can lead overboard, or to any other suitable drain.

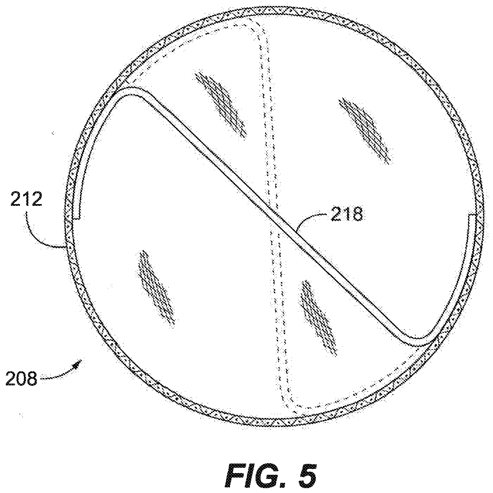

As shown in Figs. 2-4, both the tube wall of tube 112 and the sheet of tube insert 118 include a solid sheet material. However it is also contemplated that one or both of the tube wall and sheet/insert can include a mesh material. Fig. 5 shows an embodiment of a water separator 208 wherein the tube wall of tube 212 and the twisted sheet of the tube insert 218 are made of a mesh material. Those skilled in the art will readily appreciate that any suitable metallic or non-metallic materials can be used for tube 112 and tube insert 118, however metallic materials can be advantageous for improved condensate removal efficiency.

The methods and systems of the present disclosure, as described above and shown in the drawings, provide for water separation in environmental control systems with superior properties including light weight, a form factor that fits within existing ductwork, and increased amount of water separated from air conditioned air. While the apparatus and methods of the subject disclosure have been shown and described with reference to preferred embodiments, those skilled in the art will readily appreciate that changes and/or modifications may be made thereto without departing from the scope of the appended claims.

## Claims

1. A water separator (108, 208) suitable for an aircraft (10), comprising:
a tube (112, 212) defining a longitudinal axis (A), wherein the tube (112, 212) includes a tube wall separating an interior (114) of the tube (112, 212) from an exterior (116) thereof; and
a tube insert (118, 218) mounted within the tube (112, 212),
wherein the tube insert (118, 218) includes a sheet (119) that is helically twisted about the longitudinal axis (A),
**characterized in that** the tube insert (118, 218) includes a plurality of mounting tabs (120) bent 90° from the sheet (119) for mounting the tube insert (118, 218) to the tube wall.

2. A water separator (108, 208) as recited in claim 1, wherein the sheet (119) is twisted at least 200°.

3. A water separator (108, 208) as recited in any of the preceding claims, wherein the mounting tabs (120) are riveted to the tube wall.

4. A water separator (108, 208) as recited in any of the preceding claims, wherein a drain hole (122) is defined through the tube wall for draining water from condensate from the interior (114) of the tube (112, 212).

5. A water separator (108, 208) as recited in claim 4, further comprising a hood (124) partially covering over the drain hole (122) in the interior (114) of the tube (112, 212) for directing collected water toward the drain hole (122).

6. A water separator (108, 208) as recited in any of claims 4-5, further comprising a drain tube (126) mounted to the tube wall about the drain hole (122) for connecting the tube wall to a drainage system (128).

7. A water separator (108, 208) as recited in any of claims 1-6, wherein at least one of the tube wall and the sheet (119) includes a mesh material.

8. A water separator (108, 208) as recited in any of claims 1-7, wherein at least one of the tube wall and the sheet (119) includes a solid sheet material.

9. An environmental control system (100), comprising:
an air conditioner (102) with a discharge duct (104) for providing cooled air to an air conditioned space;
a water separator (108, 208) according to one of the preceding claims connected in line with the discharge duct (104) for passage of cooled air therethrough.

10. A system (100) as recited in claim 9, wherein the water separator (108, 208) is a first water separator (108, 208), wherein the system includes a second similar water separator (108, 208) connected in line with the discharge duct (104).

11. A system (100) as recited in any of claims 9-10, further comprising a coalescer water separator (108, 208) in series between the air conditioner and the water separator (108, 208).

12. A system (100) as recited in claim any of claims 9-11, wherein the water separator (108, 208) is at a point in the discharge duct (104) relative to an airflow direction prior to a drain hole (122) that is defined through the tube wall for draining water from condensate from the interior (114) of the tube (112, 212),
wherein the drain hole (122) is at a low point in the tube wall, and
further comprising a drain tube (126) mounted to the tube wall about the drain hole (122),
wherein the drain tube (126) connects the tube wall to a drainage system (128).

13. A system (100) as recited in any of claims 9-12, wherein the air conditioner (102) is mounted onboard an aircraft (10), and
wherein the discharge duct (104) terminates in a cockpit or cabin (106) of the aircraft (10).

14. A system (110) as recited in any of claims 9-13, wherein at least one of the tube wall and the sheet (119) includes a mesh material, and
wherein the water separator (108, 208) is an insert mounted within the discharge duct (104), and/or
wherein at least one of the tube wall and the sheet (119) includes a solid sheet material, and
wherein the water separator (108, 208) is an insert mounted within the discharge duct (104).

## Patentansprüche

1. Wasserabscheider (108, 208), der für ein Luftfahrzeug (10) geeignet ist, umfassend:
ein Rohr (112, 212), das eine Längsachse (A) definiert, wobei das Rohr (112, 212) eine Rohrwand beinhaltet, die ein Inneres (114) des Rohres (112, 212) von einem Äußeren (116) davon trennt; und
einen Rohreinsatz (118, 218), der innerhalb des Rohres (112, 212) montiert ist,
wobei der Rohreinsatz (118, 218) eine Lage (119) beinhaltet, die spiralförmig um die Längsachse (A) verdreht ist,
**dadurch gekennzeichnet, dass** der Rohreinsatz (118, 218) eine Vielzahl von Montagelaschen (120) beinhaltet, die 90° von der Lage (119) gebogen sind, um den Rohreinsatz (118, 218) an der Rohrwand zu montieren.

2. Wasserabscheider (108, 208) nach Anspruch 1, wobei die Lage (119) zumindest 200° verdreht ist.

3. Wasserabscheider (108, 208) nach einem der vorhergehenden Ansprüche, wobei die Montagelaschen (120) an die Rohrwand genietet sind.

4. Wasserabscheider (108, 208) nach einem der vorhergehenden Ansprüche, wobei ein Ablaufloch (122) durch die Rohrwand definiert ist, um Wasser aus Kondensat aus dem Inneren (114) des Rohres (112, 212) ablaufen zu lassen.

5. Wasserabscheider (108, 208) nach Anspruch 4, ferner umfassend eine Haube (124), die das Ablaufloch (122) in dem Inneren (114) des Rohres (112, 212) teilweise bedeckt, um gekühltes Wasser in Richtung des Ablauflochs (122) zu lenken.

6. Wasserabscheider (108, 208) nach einem der Ansprüche 4-5, ferner umfassend ein Ablaufrohr (126), das an der Rohrwand um das Ablaufloch (122) montiert ist, um die Rohrwand mit einem Drainagesystem (128) zu verbinden.

7. Wasserabscheider (108, 208) nach einem der Ansprüche 1-6, wobei zumindest eines von der Rohrwand und der Lage (119) ein Netzmaterial beinhaltet.

8. Wasserabscheider (108, 208) nach einem der Ansprüche 1-7, wobei zumindest eines von der Rohrwand und der Lage (119) ein festes Lagenmaterial beinhaltet.

9. Umweltsteuersystem (100), umfassend:
eine Klimaanlage (102), mit einem Ausstoßkanal (104), um einem klimatisierten Raum gekühlte Luft bereitzustellen;
einen Wasserabscheider (108, 208) nach einem der vorhergehenden Ansprüche, der in Reihe mit dem Ausstoßkanal (104) zum Durchlass von gekühlter Luft dort hindurch verbunden ist.

10. System (100) nach Anspruch 9, wobei der Wasserabscheider (108, 208) ein erster Wasserabscheider (108, 208) ist, wobei das System einen zweiten ähnlichen Wasserabscheider (108, 208) beinhaltet, der in Reihe mit dem Ausstoßkanal (104) verbunden ist.

11. System (100) nach einem der Ansprüche 9-10, ferner umfassend einen Koaleszenzwasserabscheider (108, 208) in Reihe zwischen der Klimaanlage und dem Wasserabscheider (108, 208).

12. System (100) nach einem der Ansprüche 9-11, wobei sich der Wasserabscheider (108, 208) an einem Punkt in dem Ausstoßkanal (104) relativ zu einer Luftstromrichtung vor einem Ablaufloch (122) befindet, das durch die Rohrwand definiert ist, um Wasser aus Kondensat aus dem Inneren (114) des Rohres (112, 212) ablaufen zu lassen,
wobei sich das Ablaufloch (122) an einem niedrigen Punkt in der Rohrwand befindet, und
ferner umfassend ein Ablaufrohr (126), das an der Rohrwand um das Ablaufloch (122) montiert ist,
wobei das Ablaufrohr (126) die Rohrwand mit einem Drainagesystem (128) verbindet.

13. System (100) nach einem der Ansprüche 9-12, wobei die Klimaanlage (102) an Bord eines Luftfahrzeugs (10) montiert ist, und
wobei der Ausstoßkanal (104) in einem Cockpit oder einer Kabine (106) des Luftfahrzeugs (10) endet.

14. System (110) nach einem der Ansprüche 9-13, wobei zumindest eines von der Rohrwand und der Lage (119) ein Netzmaterial beinhaltet, und
wobei der Wasserabscheider (108, 208) ein Einsatz ist, der innerhalb des Ausstoßkanals (104) montiert ist, und/oder
wobei zumindest eines von der Rohrwand und der Lage (119) ein festes Lagenmaterial beinhaltet, und
wobei der Wasserabscheider (108, 208) ein Einsatz ist, der innerhalb des Ausstoßkanals (104) montiert ist.

## Revendications

1. Séparateur d'eau (108, 208) approprié pour un aéronef (10), comprenant :
un tube (112, 212) définissant un axe longitudinal (A), dans lequel le tube (112, 212) comporte une paroi de tube séparant un intérieur (114) du tube (112, 212) d'un extérieur (116) de celui-ci ; et
un insert de tube (118, 218) monté à l'intérieur du tube (112, 212),
dans lequel l'insert de tube (118, 218) comporte une feuille (119) qui est torsadée en hélice autour de l'axe longitudinal (A),
**caractérisé en ce que** l'insert de tube (118, 218) comporte une pluralité de pattes de montage (120) pliées à 90° par rapport à la feuille (119) pour monter l'insert de tube (118, 218) sur la paroi de tube.

2. Séparateur d'eau (108, 208) selon la revendication 1, dans lequel la feuille (119) est torsadée d'au moins 200°.

3. Séparateur d'eau (108, 208) selon l'une quelconque des revendications précédentes, dans lequel les pattes de montage (120) sont rivetées sur la paroi de tube.

4. Séparateur d'eau (108, 208) selon l'une quelconque des revendications précédentes, dans lequel un trou de drainage (122) est défini à travers la paroi de tube pour drainer l'eau du condensat de l'intérieur (114) du tube (112, 212).

5. Séparateur d'eau (108, 208) selon la revendication 4, comprenant en outre un capot (124) recouvrant partiellement le trou de drainage (122) à l'intérieur (114) du tube (112, 212) pour diriger l'eau collectée vers le trou de drainage (122).

6. Séparateur d'eau (108, 208) selon l'une quelconque des revendications 4 et 5, comprenant en outre un tube de drainage (126) monté sur la paroi de tube autour du trou de drainage (122) pour connecter la paroi de tube à un système de drainage (128) .

7. Séparateur d'eau (108, 208) selon l'une quelconque des revendications 1 à 6, dans lequel au moins l'une de la paroi de tube et de la feuille (119) comporte un matériau à mailles.

8. Séparateur d'eau (108, 208) selon l'une quelconque des revendications 1 à 7, dans lequel au moins l'une de la paroi de tube et de la feuille (119) comporte un matériau en feuille solide.

9. Système de conditionnement d'air (100), comprenant :
un climatiseur (102) avec un conduit d'évacuation (104) pour fournir de l'air refroidi à un espace climatisé ;
un séparateur d'eau (108, 208) selon l'une des revendications précédentes connecté en ligne avec le conduit d'évacuation (104) pour le passage d'air refroidi à travers celui-ci.

10. Système (100) selon la revendication 9, dans lequel le séparateur d'eau (108, 208) est un premier séparateur d'eau (108, 208), dans lequel le système comporte un second séparateur d'eau similaire (108, 208) connecté en ligne avec le conduit d'évacuation (104).

11. Système (100) selon l'une quelconque des revendications 9 et 10, comprenant en outre un séparateur d'eau coalesceur (108, 208) en série entre le climatiseur et le séparateur d'eau (108, 208) .

12. Système (100) selon l'une quelconque des revendications 9 à 11, dans lequel le séparateur d'eau (108, 208) est situé à un point dans le conduit d'évacuation (104) par rapport à une direction d'écoulement d'air avant un trou de drainage (122) qui est défini à travers la paroi de tube pour évacuer l'eau du condensat de l'intérieur (114) du tube (112, 212),
dans lequel le trou de drainage (122) est situé à un point bas dans la paroi de tube, et
comprenant en outre un tube de drainage (126) monté sur la paroi de tube autour du trou de drainage (122),
dans lequel le tube de drainage (126) connecte la paroi de tube à un système de drainage (128).

13. Système (100) selon l'une quelconque des revendications 9 à 12, dans lequel le climatiseur (102) est monté à bord d'un aéronef (10), et
dans lequel le conduit d'évacuation (104) se termine dans un cockpit ou une cabine (106) de l'aéronef (10).

14. Système (110) selon l'une quelconque des revendications 9 à 13, dans lequel au moins l'une de la paroi de tube et de la feuille (119) comporte un matériau à mailles, et
dans lequel le séparateur d'eau (108, 208) est un insert monté à l'intérieur du conduit d'évacuation (104), et/ou
dans lequel au moins l'une de la paroi de tube et de la feuille (119) comporte un matériau en feuille solide, et
dans lequel le séparateur d'eau (108, 208) est un insert monté à l'intérieur du conduit d'évacuation (104).
